# EUROPEAN PATENT SPECIFICATION

(11) **EP 3 034 400 B1**
(45) Date of publication and mention of the grant of the patent: **07.06.2017**
(21) Application number: 14307044.9
(22) Date of filing: 16.12.2014
(51) Int. Cl.: B64C 39/02

(54) **DRONE FOR TAKING PICTURES OR VIDEOS**
DROHNE ZUR AUFNAHME VON BILDERN ODER VIDEOS
DRONE PERMETTANT DE PRENDRE DES PHOTOS OU DES VIDÉOS

(43) Date of publication of application: 22.06.2016
(73) Proprietor: Hassan Zureikat, Sabine, 31400 Toulouse (FR)
(72) Inventor: Hassan Zureikat, Sabine, 31400 Toulouse (FR)
(74) Representative: Viering, Jentschura & Partner mbB Patent- und Rechtsanwälte

(56) References cited:
- EP-A1- 1 524 189
- WO-A2-2012/130790
- WO-A2-2014/106814
- DE-A1-102005 014 949
- US-B1- 6 712 312

## Description

### TECHNICAL FIELD OF THE INVENTION

The invention relates to a drone configured to communicate with a portable electronic device, such as a smartphone, and being further adapted to take pictures or videos of a user.

The invention also relates to a set for taking pictures or videos of a user, the set comprising a drone and an electronic device.

The invention further relates to a method for taking pictures of a user.

The invention also relates to a method for controlling a drone.

The invention also relates to an associated computer program product.

### BACKGROUND OF THE INVENTION

Currently, portable electronic devices such as mobile phones, smartphones or digital tablets are part of the everyday life.

Such electronic devices, and in particular smartphones, are generally equipped with a huge number of functionalities. For example, it is now common to take pictures or videos with a smartphone equipped with at least one camera.

After taking pictures or videos with a smartphone, a user has the possibility to share the taken pictures or videos on social networks thanks to some smartphone applications. The pictures which are posted on social network are, for example, intended to show relations of the user, the user himself or places where the user has been. A picture of the user taken by the user is called a selfie.

However, taking pictures of oneself with a smartphone is far from being convenient. Indeed, when a user wants to take a picture of himself with a smartphone, the user has the following possibilities: asking another person, holding the smartphone with his hand as far away from is face as possible, placing the smartphone on some elevation and starting up a timer or taking a picture of his mirror reflection. When asking another person, the user loses in autonomy and has to find this other person which is not always possible. Moreover, when the user takes selfies, the pictures taken are most of the time badly centered or blurry.

EP 1 524 189 A discloses a micro-aircraft which can be associated for instance to a cellular phone. The micro-aircraft is provided with at least four microrotors actuated with compressed fluid or by ring-shaped electric motors.

WO 2012/130790 A discloses a personal UAV kit for storing, preparing and remote control of micro UAVs.

WO 2014/106814 A discloses a reporter drone to approch a specific speaker.

US 6 712 312 B discloses a reconnaissance system and a method using an unmanned surface vehicle and at least one micro-aerial vehicle.

### SUMMARY OF THE INVENTION

There is therefore a need for a device enabling a user to autonomously take well centered and well-focused pictures of himself.

To this end, the invention relates to a set for taking pictures of a user, the set comprising a portable electronic device, for instance a smartphone, comprising an electronic device application configured to control a drone. The set also comprises a drone configured to communicate with the portable electronic device, further adapted to take pictures or videos of a user, the drone being an accessory of the electronic device, the drone being movable between a first configuration secured to the electronic device and a second configuration detached from the electronic device, the drone being equipped with a camera.

The drone of the set according to the invention comprises a body equipped with elevation motors for elevating the drone in the air when the drone is in the second configuration and a camera holder attached to the body and movable with regards to the body, the camera holder holding the camera. The elevation motors are movable between a third configuration folded up inside the body and a fourth configuration deployed outside the body, the body comprising a motor for moving the elevation motors between the third configuration and the fourth configuration. The portable electronic device is a smartphone, the drone having a weight and dimensions inferior or equal to respectively the weight and dimensions of the electronic device.The set according to the invention comprises also the following features, considered alone or in any combination that is technically possible:
- the number of elevation motors is at least two, the body comprises at least two helixes, each elevation motor being configured to rotate at least one helix.
- the drone comprises a flexible rod linking the body to the camera holder and a flexion motor for moving the rod with regards to the body.
- the drone is configured to revert to the user, notably when the user stops taking pictures or videos with the drone.
- the drone is waterproof.
- the drone comprises sensors configured to detect obstacles.
- the drone comprises a microphone for video recording.
- the drone comprises a geolocation system for bookmarking the locations where the drone is.
- the weight of the drone is less than or equal to 3 kilograms.

The invention also relates to a method for controlling a drone for taking pictures of a user comprising:
- providing a set as described above,
- deploying the elevation motors by using a motor,
- elevating the drone in the air,
- orientating the camera so that the user be in the field of the camera, and
- taking pictures or videos of the user with the camera of the drone.

The invention also relates to a computer program product, the computer program being loadable into a data-processing unit and adapted to cause execution of a method as described above for controlling a drone when the computer program is run by the data-processing unit.

The invention also relates to a set according to claim 1.

The set according to the invention may include one or more of the features of claims 2 to 9 considered alone or in any combination that is technically possible.

The invention also relates to a method according to claim 10.

The invention also relates to a computer program product according to claim 11.

### BRIEF DESCRIPTION OF THE DRAWINGS

The invention will be easier to understand in view of the following description, provided solely as an example and with reference to the appended drawings in which:
- figure 1 is a schematic representation of a set according to the invention, the set comprising an electronic device and a drone,
- figure 2 is a front view of the drone of figure 1,
- figure 3 is a side view of the drone of figure 1,
- figure 4 is another front view of the drone of figure 1, the drone comprises elevation motors in a fourth configuration, and
- figure 5 is another front view of the drone of figure 4, the elevation motors being in a fifth configuration.

### DETAILED DESCRIPTION OF SOME EMBODIMENTS

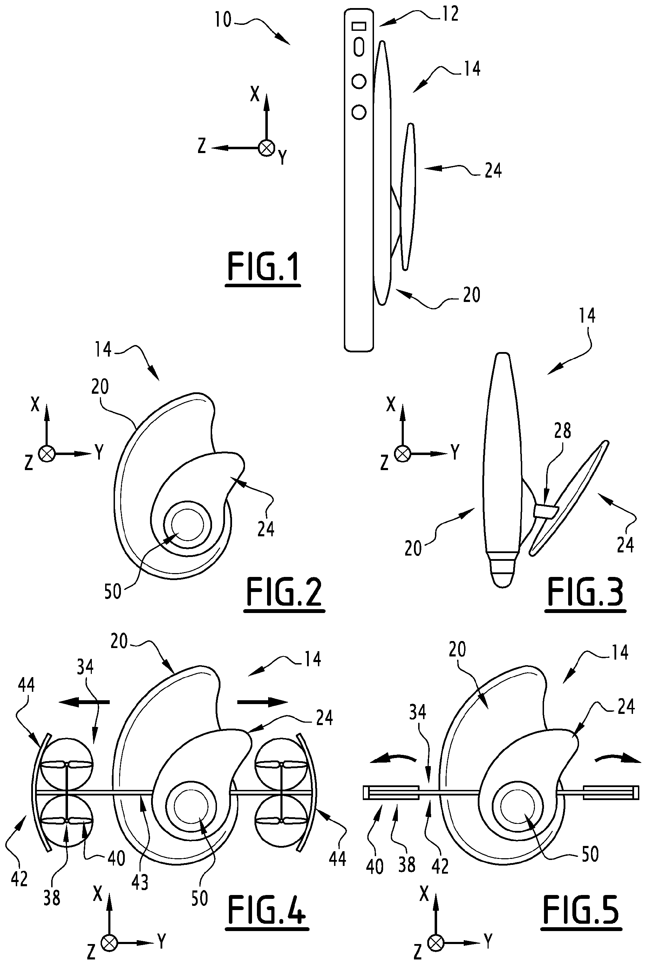

A set 10 according to an embodiment of the invention is illustrated on figure 1.

The set 10 is configured to take pictures or videos of a user of the set 10 and of the environment surrounding the user.

As illustrated on figure 1, the set 10 comprises a portable electronic device 12 and a drone 14 configured to interact with the electronic device 12.

In the description, it is defined a longitudinal direction X represented by an X-axis on figure 1 and corresponding to the length of the electronic device 12. It is also defined an elevation direction Z, perpendicular to the longitudinal direction X and corresponding to the thickness of the electronic device 12. The elevation direction Z is represented by a Z-axis on figure 1. It is also defined a transversal direction Y, perpendicular to the longitudinal direction X and to the elevation direction Z. The transversal direction Y is represented by a Y-axis on figure 1.

The portable electronic device 12 is a device that can be carried by a user.

The electronic device 12 has, for example, a length comprises between 3 centimeters (cm) and 50 cm in the longitudinal direction X, a width comprises between 3 cm and 50 cm in the transversal direction Y and a thickness comprises between 0.1 millimeters (mm) and 5 cm in the elevation direction Z.

The weight of the electronic device 12 is, for example, inferior to 3 kilograms (kg).

The electronic device 12 comprises a display, a human-machine interface, a processing unit and at least a memory. The memory enables to store computer programs.

Electronic device applications are specific computer programs. An electronic device application is a software that can be downloaded and installed on the electronic device, for example, via an internet connection or via a computer when the electronic device is connected to the computer. The human-machine interface enables the user to communicate and send instructions to the electronic device 12.

The electronic device 12 comprises at least one electronic device application configured to control the drone 14. In particular, the electronic device 12 is adapted to send commands to the drone 14 and to transfer data from the drone 14 through a wireless transmission protocol following, for example, the standards of the group IEEE 802.11 (Wi-Fi) or IEEE 802.15 (Bluetooth).

The portable electronic device 12 is, for example, a smartphone or a digital tablet. A smartphone is a mobile phone with more advanced computing capability and connectivity than basic feature mobile phones. Smartphones typically include the features of a phone with those of another popular consumer device, such as a personal digital assistant, a media player, a digital camera, and/or a geolocation system. A digital tablet is a mobile computer with display, circuitry and battery in a single unit.

A drone or UAV (acronym for *Unmanned Aerial Vehicle*) is an aircraft without a human pilot aboard and that is remote-controlled. The drone 14 is, therefore, adapted to fly.

The drone 14 is an accessory of the electronic device 12. Hence, the drone 14 has, advantageously, a weight and dimensions inferior or equal to respectively the weight and the dimensions of the electronic device 12. An accessory is a component configured to bring new features to another object or to improve the way of operating of another object.

The drone 14 is configured to take pictures or videos of a user. In particular, the drone 14 plays the role of a third hand that enables a user taking pictures of himself.

The drone 14 is configured to be transported by the user with the electronic device 12.

The drone 14 is configured to communicate with the electronic device 12 for taking pictures or videos of the user. By the term "communicate", it is to be understood that the drone 14 and the electronic device 12 can exchange data and instructions.

The drone 14 is movable between a first configuration secured to the electronic device 12, illustrated on figure 1 and a second configuration detached from the electronic device 12, illustrated on figures 2 to 5. By the expression "secured to the electronic device 12", it is to be understood that the drone 14 is in contact with a surface of the electronic device 12 and is movable together with the electronic device 12. By the expression "detached from the electronic device 12", it is to be understood that the drone 14 is not in contact with the electronic device 12.

The drone 14 is waterproof, which means that the drone 14 can be used in a wet environment, for example under the rain.

The drone 14 has a weight less than or equal to the weight of the electronic device 12. More particularly, the drone 14 has a weight less than or equal to 3 kilograms.

As illustrated on figures 2 and 3, the drone 14 comprises a body 20, a camera holder 24 and a rod 28 (visible on figure 3) for connecting the camera holder 24 to the body 20.

In one embodiment of the invention as described further, the drone 14 also comprises a microphone, sensors and a geolocation system, each of these systems being optional.

The body 20 is configured to be fixed to the electronic device 12 when the drone 14 is in the first configuration secured to the electronic device 12. For example, the body 20 is configured to be fixed on a surface of the electronic device 12 which belongs to the plane formed by the longitudinal direction X and the transversal direction Y.

The body 20 has, for example, a length comprised between 3 cm and 15 cm along the longitudinal direction X. The width of the body 20 along the transversal direction Y is, for example, comprised between 3 cm and 10 cm. The thickness of the body 20 along the elevation direction Z is, for example, comprised between 0.5 cm and 5 cm.

As illustrated on figure 2, the body 20 has an elliptic shape. Such an elliptic shape enables a good handling of the body 20.

In a variant, the shape of the body 20 is different, for example, circular, rectangular or triangular.

In the embodiment illustrated on figure 1, the body 20 has two side openings located on opposite sides of the body 20. Each side opening extends along the longitudinal direction X and along the elevation direction Z.

The body 20 also comprises a motor system 34 illustrated on figure 4 and 5 and some fasteners configured to secure the body 20 to the electronic device 12. The body 20 comprises also a battery, an antenna, a memory and a data-processing unit.

The motor system 34 is configured to elevate the drone 14 in the airs.

The motor system 34 comprises elevation motors 38, helixes 40, a support 42 configured to support the elevation motors 38 and the helixes 40 and a deployment motor.

The elevation motors 38, the helixes 40 and the support 42 are movable together between a third configuration of folding, folded-up inside the body 20 and illustrated on figure 2 and 3, a fourth configuration of deployment, deployed outside the body 20 and illustrated on figure 4, and a fifth configuration of takeoff outside the body 20 and which is illustrated on figure 5. By definition, the space in contact with the intern surface of the body 20 is called the "interior of the body 20". The space in contact with the exterior surface of the body 20 is called the "exterior of the body 20". In these definitions, the side openings of the body 20 are not taken into account.

The fourth configuration and the fifth configuration are only possible when the drone 14 is in the second configuration detached from the electronic device 12.

The elevation motors 38 are configured to elevate the drone 14 in the airs when the drone 14 is in the second configuration detached from the electronic device 12 and when the elevation motors 38 are in the fifth configuration of takeoff.

As illustrated on figure 4, there are four elevation motors 38 and four helixes 40. In a variant, there are only two or three elevation motors 38 or six elevation motors 38 and six helixes 40. In another variant, the number of helixes 40 is superior to the number of elevation motors 38. In another variant, the motor system 34 comprises at least two elevation motors 38 and two helixes 40, each elevation motor 38 being configured to rotate at least one helix 40.

Each elevation motor 38 is configured to rotate at least one helix 40. As illustrated on figure 4, an elevation motor 38 is configured to rotate a helix 40.

In the fourth configuration of deployment and in the fifth configuration of takeoff, the elevation motors 38 are arranged so that there are two pairs of elevation motors 38 located at opposite sides of the body 20. The elevation motors 38 of a pair are configured to rotate the corresponding helixes 40 in opposite directions. The helixes 40 of a pair are rotated at the same time.

In the fourth configuration of deployment, the elevation motors 38 and the helixes 40 are in the plan formed by the longitudinal direction X and the transversal direction Y.

In the fifth configuration of takeoff, the elevation motors 38 and the helixes 40 are in the plan formed by the longitudinal direction X and the elevation direction Z.

The elevation motors 38 are, for example, the A10-12S UAV motors from the company Hacker Brushless Motors which is a registered trademark.

As illustrated on figure 4, each helix 40 has two blades. In a variant, the number of blades of each helix 40 is strictly superior to two.

The support 42 is configured to support the elevation motors 38 and the helixes 40. The support 42 comprises one main stalk 43 and two lateral stalks 44. Each end of the main stalk 43 carries two elevation motors 38. Each lateral stalk 44 is located at opposite end of the main stalk 43. The lateral stalks 44 enable closing the openings of the body 20 when the elevation motors 38, the helixes 40 and the support 42 are in the third configuration folded up inside the body 20. The lateral stalks 44 are also used for camouflage purposes as to hide the presence of the elevation motors 38, the helixes 40 and the support 42 when the elevation motors 38, the helixes 40 and the support 42 are in the third configuration folded up inside the body 20.

The deployment motor is configured to move together the elevation motors 38, the helixes 40 and the support 42 between the third configuration, the fourth configuration and the fifth configuration.

In a variant, the passage from the third configuration to the fourth configuration is done mechanically.

The deployment motor is, for example, a magnetic motor.

The fasteners are, for example, a suction cup or a magnet configured to stick to the electronic device 12 when the drone 14 is in the first configuration secured to the electronic device 12.

The battery is configured to provide autonomy to the drone 14. As it takes only few seconds to take a picture or several pictures of the user, and only few minutes to record a video of the user, the battery has a small capacity.

The battery is, for example, a lithium silver battery having an operating power comprised between 7 Watts (W) and 10 W.

The antenna enables a wireless communication between the drone 14 and the electronic device 12.

The data are, for example, exchanged between the drone 14 and the electronic device 12 through a Wi-Fi protocol and/or a Bluetooth protocol.

The memory is configured to buffer the pictures and the videos taken by the drone 14 until the pictures and the videos are sent to the electronic device 12. A buffer is a region of a physical memory storage configured to temporarily store data.

The memory is, for example, a memory card with 4 Gigabits (Gb) RAM (acronym for *Random-Access Memory*).

A computer program product is stored in the memory. The interaction between the computer program product and the data-processing unit enables to carry out a method for taking pictures or videos of a user of the drone 40.

The computer program comprises one or more stored sequence of program instructions.

The computer program is loadable into the data-processing unit and adapted to cause execution of the method for taking pictures or videos of the user when the computer program is run by the data processing unit.

The camera holder 24 has, for example, a length comprised between 2 cm and 10 cm along the longitudinal direction X. The width of the camera holder 24 along the transversal direction Y is, for example, comprised between 2 cm and 7 cm. The thickness of the camera holder 24 along the elevation direction Z is, for example, comprised between 0.3 cm and 1 cm.

As illustrated on figure 2, the camera holder 24 has an elliptic shape similar to the shape of the body 20 illustrated on this figure 2.

In a variant, the shape of the camera holder 24 is different, for example, circular, rectangular or triangular.

The camera holder 24 is secured to the body 20 through the rod 28.

The camera holder 24 is movable with regards to the body 20 thanks to the rod 28.

The camera holder 24 comprises a camera 50. The camera 50 has a diameter comprised between 0.8 cm and 1.5 cm.

The camera 50 has a high resolution. The resolution of the camera 50 is, for example, superior to 8 megapixels, the dimensions of a pixel being 1.5 microns per 1.5 microns.

The rod 28 is configured to connect the camera holder 24 to the body 20. The rod 28 is also configured to be moved together with the camera holder 24 with regards to the body 20.

The rod 28 is made of a flexible material. For example, the rod 28 is made of flexible plastic.

The rod 28 comprises a flexion motor configured to control the flexion of the rod 28. Different angles of flexion of the rod 28 can indeed provide different orientations of the camera holder 24. For example, the rod 28 is configured to rotate the camera holder 24 along the elevation axis Z.

The microphone is, for example, secured to the body 20 or to the camera holder 24. The microphone is configured to record a sound when the drone 14 is recording a video.

The microphone is, for example, a high quality microphone.

The sensors are configured to detect obstacles when the drone 14 is flying in the airs. The obstacles are, for example, the ground, a tree or people.

For example, there are five sensors: fours sensors located at each end of the surface of the body 20 which is linked to the rod 28 and one sensor located on the surface of the body 20 which can be secured to the electronic device 12. The use of five sensors enables the detection of most of the obstacles.

The sensors are, for example, laser sensors or acoustic sensors.

The geolocation system is configured to determine and save the locations where the pictures or the videos were taken by the drone 14.

The geolocation system is, for example, placed inside the body 20.

The geolocation system is, for example, a GPS (acronym for *Global Positioning System).*

A method for taking pictures or videos of a user will now be described.

Initially, the method comprises a step of providing a set 10 as described above. The drone 14 is, for example, in the first configuration secured to the electronic device 12.

Then, the method comprises a step of separating the drone 14 from the electronic device 12 so that the drone 14 is in the second configuration. This separating step is carried out by the user of the set 10. The elevation motors 38, the helixes 40 and the support 42 are in the third configuration folded up inside the body 20.

The method comprises, further, a step of activating the drone 14 by sending an instruction to the drone 14 via the electronic device application of the electronic device 12. By activating the drone 14, it should be understood putting the elevation motors 38, the helixes 40 and the support 42 in the fourth configuration of deployment. The instruction is received by the antenna of the body 20 and is processed by the data-processing unit in interaction with the computer program of the body 20 to create a command. The command entails the positioning of the elevation motors 38, the helixes 40 and the support 42 in the fourth configuration of deployment. Then, the command entails the positioning of the elevation motors 38, the helixes 40 and the support 42 in the fifth configuration of takeoff. The drone 14 is, therefore, ready to fly.

In a variant, the body 20 of the drone 14 comprises an activation button and the step of activating the drone 14 is performed by pressing the activation button.

The method comprises, further, a step of elevating the drone 14 in the airs thanks to the elevation motors 38 and to the helixes 40. During the elevating step, the movement of the drone 14 is controlled by the processing unit in interaction with the computer program of the body 20 and, optionally, by the user through the electronic device application.

The drone 14 can move in a volume defined at any time by a flying distance. The flying distance is the length of the segment whose ends are a point belonging to the electronic device 12 and a point belonging to the drone 14. The length of the segment is the minimum distance between the different points possible. The flying distance is, for example, equal to 30 cm. The maximum flying distance is, for example, equal to 5 meters (m). Like this, the drone 14 stays near the user. Indeed, the principal aim of the drone 14 is to take pictures or videos of a user intended to be posted on social networks and most of these pictures and videos are taken indoor.

Then, the method comprises a step of orientating the camera 50 so that the user be in the field of the camera 50. The field of the camera 50 is the part of the space that can be imaged by the camera 50.

The orientating step comprises, optionally, one of the following first to fifth phases taken solely or in any combination that is technically possible. Each of the first to the fifth phase is carried out by the processing unit in interaction with the computer program

The first phase comprises guiding the drone 14 to predefined angles with regards to the face of the user in order to take selfies of the user.

The second phase comprises guiding the drone 14 to predefined angles with regards to the body of the user in order to take pictures of the user as if the user was a model. The second phase enables taking pictures of the whole body of the user.

The third phase comprises guiding the drone 14 around a route pre-selected by the user in order to randomly take pictures or videos of the user and of the environment surrounding the user.

The fourth phase comprises commanding the drone 14 so that the drone 14 follows a tagged face or a tagged object.

The fifth phase comprises stabilizing the drone 14. During this fifth phase, the sensors send to the drone 14 information about the movement of the drone 14. Then, the drone 14 adjusts its position thanks to the sent information.

Then, the method comprises a step of taking pictures or videos of the user and of the environment surrounding the user. This step is carried out by the camera 50 of the drone 14. The moment when pictures or videos are taken with the camera 50 is commanded by the data-processing unit in interaction with the computer program of the drone 14.

The step of taking pictures or videos comprises, optionally, a sixth phase and a seventh phase taken solely or in combination. Each of the sixth and the seventh phase is carried out by the processing unit in interaction with the computer program

The sixth phase comprises triggering the camera 50 to take pictures of the user in function of a rhythm imposed by a music.

The seventh phase comprises triggering the camera 50 to take pictures of the user during the whole movement of the user.

The method comprises, further, a step of bookmarking the locations where the drone 14 is. It is, therefore, possible to know where a picture or a video has been taken with the drone 14. The bookmarking step is carried out by the processing unit in interaction with the computer program and the geolocation system.

The pictures and videos taken by the camera 50 are then transmitted to the memory of the body 20 and are buffered until their transmission to the electronic device 12. The transmission is carried out thanks to the antenna of the body 20.

Then, the method comprises, optionnaly, a step of guiding the drone 14 to revert to the user, notably when the user stops taking pictures or videos with the drone 14. For example, the drone 14 reverts to a user's hand. The guiding step is carried out by the processing unit in interaction with the computer program.

Therefore, the drone 14 is a mini drone that is accessorily attached to a user's electronic device, such as a smartphone, and is then detached to be controlled by an application downloaded on the user's electronic device in order to take pictures or videos of the user along with the surroundings of the user. Hence, the drone 14 of the invention replaces the third hand needed when taking selfie pictures or group pictures.

The drone 14 can be easily secured to the electronic device 12 of the user. Thus, the drone 14 becomes one with the user's electronic device so that the user does not get the feeling that he is carrying an additional load which is the case when carrying a traditional camera.

For security concerns, the pictures and the videos taken by the drone 14 are not stored in the drone 14 after the pictures and the videos have been sent to the user's electronic device 12 through online streaming. This prevents private pictures from getting into strangers hands or being lost if the drone 14 is lost or broken. Moreover, this enables the drone 14 having a smaller memory and a less consuming processing unit.

Therefore, the drone 14 enables the user to take pictures or videos of himself in an autonomous way without asking another person. The probabilities of taking badly centered and/or blurry pictures are also reduced with regards to the state of the art.

The embodiments and alternative embodiments considered here-above can be combined to generate further embodiments of the invention.

## Claims

1. A set (10) for taking pictures of a user, the set (10) comprising:
- a portable electronic device (12), for instance a smartphone, comprising an electronic device application configured to control a drone, and
- a drone (14) configured to communicate with the portable electronic device (12) and being further adapted to take pictures or videos of a user, the drone (14) being an accessory of the electronic device (12), the drone (14) being movable between a first configuration secured to the electronic device (12) and a second configuration detached from the electronic device (12), the drone (14) being equipped with a camera (50), the drone (14) comprising a body (20) equipped with elevation motors (38) for elevating the drone (14) in the air when the drone (14) is in the second configuration and a camera holder (24) attached to the body (20) and movable with regards to the body (20), the camera holder (24) holding the camera (50), the elevation motors (38) being movable between a third configuration folded up inside the body (20) and a fourth configuration deployed outside the body (20), the body (20) comprising a motor for moving the elevation motors (38) between the third configuration and the fourth configuration,
the portable electronic device being a smartphone, the drone having a weight and dimensions inferior or equal to respectively the weight and the dimensions of the electronic device.

2. A set (10) according to claim 1, wherein the number of elevation motors (38) is at least two, the body (20) comprises at least two helixes (40), each elevation motor (38) being configured to rotate at least one helix (40).

3. A set (10) according to claim 1 or 2, wherein the drone (14) comprises a flexible rod (28) linking the body (20) to the camera holder (24) and a flexion motor for moving the rod (28) with regards to the body (20).

4. A set (10) according to any one of claims 1 to 3, wherein the drone (14) is configured to revert to the user, notably when the user stops taking pictures or videos with the drone (14).

5. A set (10) according to any one of claims 1 to 4, wherein the drone (14) is waterproof.

6. A set (10) according to any one of claims 1 to 5, wherein the drone (14) further comprises sensors configured to detect obstacles.

7. A set (10) according to any one of claims 1 to 6, wherein the drone (14) comprises a microphone for video recording.

8. A set (10) according to any one of claims 1 to 7, wherein the drone (14) comprises a geolocation system for bookmarking the locations where the drone (14) is.

9. A set (10) according to any one of claims 1 to 8, wherein the weight of the drone (14) is less than or equal to 3 kilograms

10. A method for controlling a drone for taking pictures or videos of a user, the method comprising :
- providing a set (10) according to any one of claims 1 to 9,
- deploying the elevation motors (38) by using a motor,
- elevating the drone (14) in the air,
- orientating the camera (50) so that the user be in the field of the camera (50), and
- taking pictures or videos of the user with the camera (50) of the drone (14).

11. -Computer program product comprising a computer readable medium, having thereon a computer program comprising program instructions, the computer program being loadable into a data-processing unit and adapted to cause execution of a method according to claim 10 when the computer program is run by the data-processing unit.

## Patentansprüche

1. Ein Set (10) zum Aufnehmen von Bildern von einem Nutzer, wobei das Set (10) aufweist:
eine tragbare elektronische Vorrichtung (12), zum Beispiel ein Smartphone, welche eine elektronische-Vorrichtung-Anwendung aufweist, die konfiguriert ist, um eine Drohne zu steuern,
eine Drohne (14), die konfiguriert ist zum Kommunizieren mit der tragbaren elektronischen Vorrichtung (12) und die ferner eingerichtet ist zum Aufnehmen von Bildern oder Videos von einem Nutzer, wobei die Drohne (14) ein Zubehör der elektronischen Vorrichtung (12) ist, wobei die Drohne (14) bewegbar ist zwischen einer ersten Konfiguration, in der sie an der elektronischen Vorrichtung (12) befestigt ist, und einer zweiten Konfiguration, in der sie von der elektronischen Vorrichtung (12) gelöst ist, wobei die Drohne (14) mit einer Kamera (50) ausgerüstet ist, wobei die Drohne (14) einen Körper (20), welcher mit Aufstiegsmotoren (38) ausgerüstet ist zum Aufsteigen der Drohne in die Luft, wenn die Drohne (14) sich in der zweiten Konfiguration befindet, und eine Kamerahalterung (24) aufweist, die an dem Körper (20) befestigt ist und relativ zu dem Körper (20) bewegbar ist, wobei die Kamerahalterung (24) die Kamera (50) hält, wobei die Aufstiegsmotoren (38) bewegbar sind zwischen einer dritten Konfiguration, in der sie im Inneren des Körpers (20) eingeklappt sind, und einer vierten Konfiguration, in der sie außerhalb des Körpers (20) ausgeklappt sind, wobei der Körper (20) einen Motor aufweist zum Bewegen der Aufstiegsmotoren (38) zwischen der dritten Konfiguration und der vierten Konfiguration,
wobei die tragbare elektronische Vorrichtung ein Smartphone ist, wobei die Drohne ein Gewicht und Abmessungen hat, die entweder geringer oder gleich dem Gewicht beziehungsweise den Abmessungen der elektronischen Vorrichtung sind.

2. Ein Set (10) gemäß Anspruch 1, wobei die Anzahl der Aufstiegsmotoren (38) mindestens zwei beträgt, wobei der Körper (20) mindestens zwei Hubschrauben (40) aufweist, wobei jeder Aufstiegsmotor (38) konfiguriert ist zum Rotieren mindestens einer Hubschraube (40).

3. Ein Set (10) gemäß Anspruch 1 oder 2, wobei die Drohne (14) einen flexiblen Stab (28) aufweist, welcher den Körper (20) mit der Kamerahalterung (24) verbindet, und einen Flexionsmotor zum Bewegen des Stabs (28) relativ zu dem Körper (20).

4. Ein Set (10) gemäß irgendeinem der Ansprüche 1 bis 3, wobei die Drohne (14) konfiguriert ist, um zu dem Nutzer zurückzukehren, insbesondere wenn der Nutzer aufhört, mit der Drohne (14) Bilder oder Videos aufzunehmen.

5. Ein Set (10) gemäß irgendeinem der Ansprüche 1 bis 4, wobei die Drohne (14) wasserdicht ist.

6. Ein Set (10) gemäß irgendeinem der Ansprüche 1 bis 5, wobei die Drohne (14) ferner Sensoren aufweist, die konfiguriert sind zum Detektieren von Hindernissen.

7. Ein Set (10) gemäß irgendeinem der Ansprüche 1 bis 6, wobei die Drohne (14) ein Mikrofon für die Videoaufzeichnung aufweist.

8. Ein Set (10) gemäß irgendeinem der Ansprüche 1 bis 7, wobei die Drohne (14) ein Ortungssystem aufweist zum Markieren der Standorte, an denen sich die Drohne (14) befindet.

9. Ein Set (10) gemäß irgendeinem der Ansprüche 1 bis 8, wobei das Gewicht der Drohne (14) geringer als oder gleich 3 Kilogramm ist.

10. Ein Verfahren zum Steuern einer Drohne zum Aufnehmen von Bildern oder Videos von einem Nutzer, wobei das Verfahren aufweist:
Bereitstellen eines Sets (10) gemäß irgendeinem der Ansprüche 1 bis 9,
Ausklappen der Aufstiegsmotoren (38) unter Verwendung eines Motors,
Aufsteigen der Drohne (14) in die Luft,
Ausrichten der Kamera (50), sodass der Nutzer im Sichtfeld der Kamera (50) ist, und
Aufnehmen von Bildern oder Videos von dem Nutzer mit der Kamera (50) der Drohne (14).

11. Ein Computerprogramm-Produkt aufweisend:
ein computerlesbares Medium, auf dem ein Computerprogramm vorhanden ist, welches Programminstruktionen aufweist, wobei das Computerprogramm in eine Datenverarbeitungseinheit geladen werden kann und eingerichtet ist, um ein Durchführen eines Verfahrens gemäß Anspruch 10 zu bewirken, wenn das Computerprogramm von der Datenverarbeitungseinheit ausgeführt wird.

## Revendications

1. Système (10) pour prendre des photos d'un utilisateur, lequel système (10) comprend :
- un dispositif électronique portable (12), comme un téléphone intelligent, comprenant une application de dispositif électronique conçue pour commander un drone ; et
- un drone (14) conçu pour communiquer avec le dispositif électronique portable (12) et conçu en outre pour prendre des photos ou des vidéos d'un utilisateur, le drone (14) étant un accessoire du dispositif électronique (12), le drone (14) pouvant basculer entre une première configuration fixée au dispositif électronique (12) et une seconde configuration détachée du dispositif électronique (12), le drone (14) comprenant une caméra (50), le drone (14) comprenant un corps (20) avec des moteurs d'élévation (38) pour élever le drone (14) dans les airs lorsque le drone (14) est dans la seconde configuration et un support de caméra (24) fixé au corps (20) et mobile par rapport au corps (20), le support de caméra (24) supportant la caméra (50), les moteurs d'élévation (38) étant mobiles entre une troisième configuration repliée dans le corps (20) et une quatrième configuration déployée hors du corps (20), le corps (20) comprenant un moteur pour basculer les moteurs d'élévation (38) entre la troisième configuration et la quatrième configuration ; le dispositif électronique portable est un téléphone intelligent, le corps possédant un poids et des dimensions inférieurs ou égaux respectivement au poids et aux dimensions du dispositif électronique.

2. Système (10) selon la revendication 1, dans lequel le nombre de moteurs d'élévation (38) est d'au moins deux, le corps (20) comprend au moins deux hélices (40), chaque moteur d'élévation (38) étant conçu pour faire tourner au moins une hélice (40).

3. Système (10) selon les revendications 1 ou 2, dans lequel le drone (14) comprend une tige flexible (28) reliant le corps (20) au support de caméra (24) et un moteur à flexion pour déplacer la tige (28) par rapport au corps (20).

4. Système (10) selon l'une quelconque des revendications 1 à 3, dans lequel le drone (14) est conçu pour revenir vers l'utilisateur, notamment lorsque l'utilisateur cesse de prendre des photos ou des vidéos avec le drone (14).

5. Système (10) selon l'une quelconque des revendications 1 à 4, dans lequel le drone (14) est à l'épreuve de l'eau.

6. Système (10) selon l'une quelconque des revendications 1 à 5, dans lequel le drone (14) comprend en outre des capteurs conçus pour détecter des obstacles.

7. Système (10) selon l'une quelconque des revendications 1 à 6, dans lequel le drone (14) comprend un microphone pour des enregistrements audio.

8. Système (10) selon l'une quelconque des revendications 1 à 7, dans lequel le drone (14) comprend un système de géolocalisation pour indexer les emplacements où le drone (14) se trouve.

9. Système (10) selon l'une quelconque des revendications 1 à 8, dans lequel le poids du drone (14) est inférieur ou égal à 3 kilogrammes.

10. Procédé pour commander un drone pour prendre des photos ou des vidéos d'un utilisateur, lequel procédé consiste à :
- utiliser un système (10) selon l'une quelconque des revendications 1 à 9 ;
- déployer les moteurs d'élévation (38) en utilisant un moteur ;
- faire s'élever le drone (14) dans les airs ;
- orienter la caméra (50) de sorte que l'utilisateur se trouve dans le champ de la caméra (50) ; et
- prendre des photos ou des vidéos de l'utilisateur avec la caméra (50) du drone (14).

11. Produit de type programme informatique comprenant un support lisible par ordinateur sur lequel se trouve un programme informatique comprenant des instructions de programme, le programme informatique peut être chargé dans une unité de traitement de données et conçu pour entraîner l'exécution d'un procédé selon la revendication 10 lorsque le programme informatique est exécuté par l'unité de traitement de données.
